# EUROPEAN PATENT SPECIFICATION

(11) **EP 3 587 145 B1**
(45) Date of publication and mention of the grant of the patent: **29.12.2021**
(21) Application number: 19179408.0
(22) Date of filing: 11.06.2019
(51) Int. Cl.: B60C 19/00

(54) **PNEUMATIC TIRE**
LUFTREIFEN
PNEUMATIQUE

(30) Priority: 29.06.2018 JP 2018125000
(43) Date of publication of application: 01.01.2020
(73) Proprietor: Toyo Tire Corporation, Itami-shi, Hyogo 664-0847 (JP)
(72) Inventor: SAKAKIBARA, Kazuhiro, Hyogo, 664-0847 (JP)
(74) Representative: Eisenführ Speiser

(56) References cited:
- JP-A- S62 216 803
- JP-A- 2017 114 163

## Description

### BACKGROUND OF THE INVENTION

### Technical Field

The present invention relates to pneumatic tires.

### Related Art

In order to prevent the generation of resonance noise occasioned by running and to reduce the generation of noise, by a method wherein an annular porous material having a specified apparent volume and apparent density is built in the inner pressure air-filled cavity of a tire, it is proposed in JP S62 216803 A that an annular tire resonance preventing material, formed by a porous material having an apparent volume of from 25% or more to 70% of less of the total inner volume of an inner pressure air-filled cavity under inflation of a tire and apparent density of 0.1 gw/cm² or less, is located in the inner pressure air-filled cavity formed between the inner surface of the tire and the outer surface of a rim. This constitution enables reduction of the peak of the power value of load noise during load-rolling of the tire, and allows reduction of the generation of noise.

In order to reduce cost while suppressing cavity resonance of a pneumatic tire, it is proposed in JP 2017 114163 A that the pneumatic tire is fixed with a suppression member for suppressing cavity resonance at a tire inner surface. The suppression member has a protrusion part protruding on an inner side in a tire radial direction relative to the tire inner surface and a space is provided between the suppression member and the tire inner surface.

As one of noises caused by pneumatic tires, a cavity resonance (also referred to as a tire cavity resonance) is known. The cavity resonance is produced by resonance of air in a tire inner cavity when the air is vibrated by vibration of a tread portion caused by unevenness of a road surface and propagates in the tire inner cavity. A pneumatic tire is known in which a sponge member is attached to an inner peripheral surface of a tread portion in order to reduce the cavity resonance (see, for example, JP 4533130 B2).

Since the sponge member also acts as a heat storage body, heat generated in the tread portion is stored in the sponge member, and the temperature inside the tire is likely to rise. As a result, durability of the pneumatic tire is likely to deteriorate particularly during high speed driving when a heat generation amount in the tread portion may increase. For this reason, JP 4533130 B2 discloses forming radiation grooves intended for heat dissipation in the sponge member.

### SUMMARY

JP 4533130 B2 discloses forming the radiation grooves having a rectangular cross-sectional shape in the sponge member for promoting heat dissipation, and no particular study has been made on further improving sound absorption. Therefore, there is room for further improvement in terms of improving not only heat dissipation but also sound absorption when forming the grooves in the sponge member.

An object of the present invention is to provide a pneumatic tire that can improve not only heat dissipation but also sound absorption of the sponge member attached to the inner peripheral surface of the tread portion.

The present invention provides a pneumatic tire as defined in claim 1.

According to the present invention, a cavity resonance propagating radially in the tire inner cavity is easily received and absorbed by the protrusions and the recesses of the sponge member, leading to effective reduction. Furthermore, since the curvature radius of the corner R portions formed in the bottom corners of the recesses of the sponge member is larger than 25% of the width of the recesses, a surface area of the bottom is larger than when the recess is formed in a rectangular shape. Accordingly, an area receiving the cavity resonance in the recess increases, improving sound absorption in the recess.

Moreover, since heat transfer from the tread portion is efficiently dissipated by the recesses having an enlarged area, heat dissipation in the recesses improves.

Furthermore, since forming the corner R portion in the bottom corner of the recess improves flexibility of the recess, it is easy to cause the sponge member to follow deformation in the tire circumferential direction when the tread portion is brought into contact with the ground, thereby improving bending durability of the sponge member.

Preferably, an angular R portion is formed in an angled part of a top of each of the protrusions.

According to this configuration, the cavity resonance is easily received normally from various directions in the portion where the angle R of the top of the protrusion is formed. This improves sound absorption at the top.

Preferably, each of the protrusions is formed as a semicircular arc portion protruding inward in the tire radial direction with a width in the tire circumferential direction as a diameter.

According to this configuration, the cavity resonance is easily received normally from various directions in the entire top of the protrusion. This further improves sound absorption at the top.

Preferably, each of the protrusions is provided with a hollow portion penetrating the protrusion in the tire width direction.

According to this configuration, the cavity resonance is absorbed by a solid portion from the surface of the protrusion to the hollow portion, and the cavity resonance is attenuated by diffused reflection on the inner wall surface in the hollow portion. Therefore, by combining the sound absorption by the solid portion and the attenuation by the hollow portion, the cavity resonance is effectively reduced.

Preferably, the hollow portion is cylindrical, and a diameter of the hollow portion is equal to a thickness of the sponge member from a surface of each of the protrusions to the hollow portion.

According to this configuration, the cavity resonance is reduced in well balance over a wide frequency range by a balanced combination of the sound absorption in the solid portion and the attenuation in the hollow portion.

Preferably, a formation pitch of a pair of the protrusions adjacent to each other in the tire circumferential direction is shorter than a ground contact length in the tire circumferential direction of the pneumatic tire.

According to this configuration, at least one protrusion exists in a ground contact shape of the pneumatic tire. Accordingly, noise caused by vibration that is input from the tread portion when brought into contact with the ground is absorbed by the protrusion when transmitted to the tire inner cavity. That is, since the vibration input from the tread portion, which may cause the cavity resonance, is reduced on an input source side, the cavity resonance is reduced.

Preferably, a height of the sponge member in the tire radial direction of a portion where the protrusions are formed is 20 mm or more, and 50% or less of a sectional height of the pneumatic tire.

According to this configuration, it is easy to obtain an effect of reducing the cavity resonance while inhibiting deterioration of assembling workability to the rim. That is, if the thickness of the sponge member is less than 20 mm, it is difficult to obtain a sufficiently effective reduction effect. Meanwhile, when the thickness of the sponge member is greater than 50% of the tire sectional height, the sponge member easily interferes with the rim during assembly of the rim, deteriorating assembling workability to the rim.

Preferably, a length of the sponge member in the tire width direction is between 30% and 70% inclusive of the tire width of the pneumatic tire.

According to this configuration, it is easy to obtain the effect of reducing the cavity resonance by the sponge member while maintaining ease of attaching the sponge member along the inner peripheral surface of the tread portion. That is, if the width of the sponge member is less than 30% of the tire width, it is difficult to sufficiently obtain the reduction effect of the cavity resonance. Meanwhile, if the width of the sponge member is greater than 70% of the tire width, the sponge member easily interferes with sidewall portions continuous on both sides of the tread portion and is easily bent, which deteriorates the assembling workability to the rim.

According to the present invention, it is possible to improve not only heat dissipation but also sound absorption of the sponge member in the pneumatic tire in which the sponge member is attached to the inner peripheral surface of the tread portion.

### BRIEF DESCRIPTION OF THE DRAWINGS

The foregoing and the other features of the present invention will become apparent from the following description and drawings of an illustrative embodiment of the invention in which:
FIG. 1 is a meridional cross-sectional view of a rim assembly according to an embodiment of the present invention;
FIG. 2 is a cross-sectional view in a tire equatorial plane of the rim assembly of FIG. 1;
FIG. 3 is a single perspective view of a sponge member;
FIG. 4 is a cross-sectional view showing a tire inner cavity of the rim assembly when brought into contact with the ground;
FIG. 5 is a cross-sectional view showing a sponge member according to a modification;
FIG. 6 is a cross-sectional view showing a sponge member according to another modification; and
FIG. 7 is a cross-sectional view along the line VII-VII of FIG. 6.

### DETAILED DESCRIPTION OF EMBODIMENTS

An embodiment according to the present invention will be described below with reference to the accompanying drawings. Note that the following description is essentially illustrative only and is not intended to limit the present invention, its application, or its use. The drawings are schematic, and a ratio of each size is different from an actual ratio.

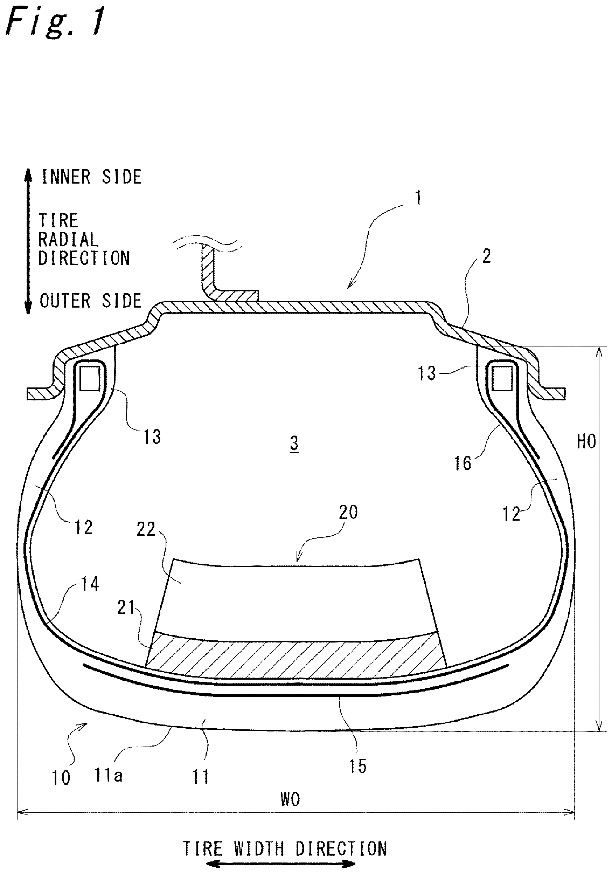

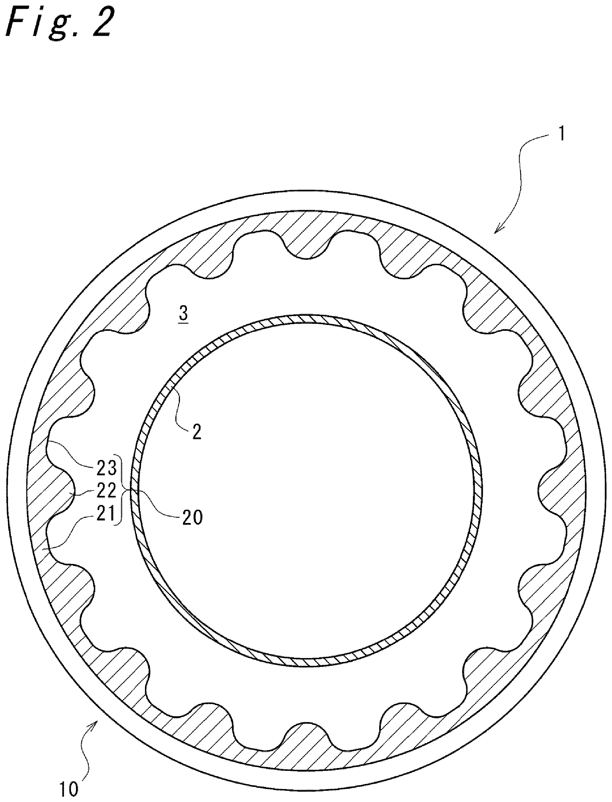

FIG. 1 is a meridional cross-sectional view of a tire rim assembly 1 according to an embodiment of the present invention. FIG. 2 is a cross-sectional view in a tire equatorial plane of the tire rim assembly 1. As shown in FIGS. 1 and 2, the tire rim assembly 1 is an assembly in which a pneumatic tire 10 is assembled on an outer periphery of a rim 2. A tire inner cavity 3 is defined between an outer periphery of the rim 2 and an inner surface of the pneumatic tire 10.

The pneumatic tire 10 includes a tread portion 11 in which a tread surface 11a is formed on an outer surface as a ground contact surface, a pair of sidewall portions 12 extending inward in a tire radial direction from both ends in a tire width direction of the tread portion 11, and a pair of bead portions 13 positioned at inner ends in a tire radial direction of the one pair of sidewall portions 12.

A carcass ply 14 is laid over a tire inner surface side of the tread portion 11 and the sidewall portions 12 between the one pair of bead portions 13. A belt layer 15 is wound in a tire circumferential direction between the tread portion 11 and the carcass ply 14. An inner liner 16 is disposed on a tire inner surface side of the carcass ply 14. The inner liner 16 is formed of a material that is hardly permeable to air.

In the pneumatic tire 10, a sponge member 20 is attached to the inner liner 16 that constitutes the tire inner surface. The sponge member 20 is a porous body, and includes open cells or closed cells obtained by foaming a rubber, a synthetic resin, or other materials. The specific gravity of the sponge member 20 is between 0.021 g/cm³ and 0.027 g/cm³ inclusive. As the sponge member 20, for example, a polyurethane-based sponge can be employed, and various other sponge-like materials can also be employed. For attaching the sponge member 20 to the inner liner 16, an appropriate joining method such as an adhesive or double-sided tape can be employed.

As shown in FIG. 2, the sponge member 20 extends annularly over the entire circumference of the tire circumferential direction. The sponge member 20 includes a base portion 21 positioned on the inner liner 16 side and a plurality of protrusions 22 protruding from the base portion 21 to the rim 2 side. In the present embodiment, the base portion 21 and the plurality of protrusions 22 are integrally formed in the sponge member 20, but the present invention is not limited to this structure. The sponge member 20 may be constructed by joining the separately formed base portion 21 and the plurality of protrusions 22. The plurality of protrusions 22 is formed at intervals in the tire circumferential direction.

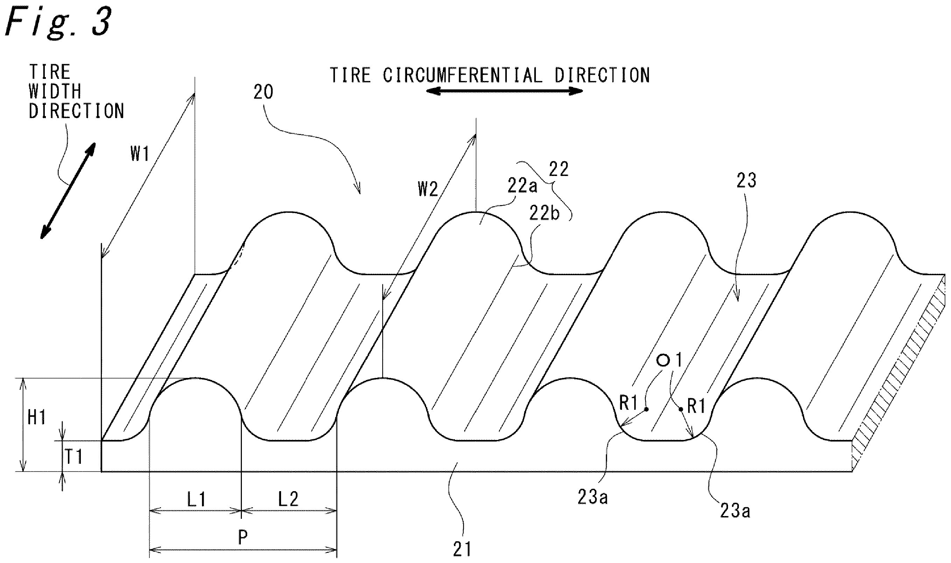

FIG. 3 is a single perspective view of the sponge member 20, showing the sponge member 20 that is not annularly wound. Note that sizes of respective portions of the sponge member 20 are measured based on the state shown in FIG. 3. As shown in FIG. 3, the base portion 21 is formed in a sheet shape having a thickness T1 of 10 mm or more. A length W1 in the tire width direction of the base portion 21 is set between 30% and 70% inclusive of a tire width W0 of the pneumatic tire 1 (see FIG. 1).

The protrusions 22 extend in the tire width direction, and a length W2 in the tire width direction agrees with the length W1 of the base portion 21. That is, the protrusions 22 extend in the tire width direction over the base portion 21. The sponge member 20 is set such that a height H1 in the tire radial direction of the protrusions 22 is 20 mm or more, and 50% or less of a sectional height H0 (see FIG. 1) of the pneumatic tire 10.

Note that the sectional height H0 of the pneumatic tire 10 is calculated by multiplying the tire width W0 by oblateness.

In each protrusion 22, a top 22a is formed in an arc shape as viewed from the tire width direction. Specifically, the top 22a is formed as a semicircular arc portion having a diameter of a length L1 in the tire circumferential direction of the protrusion 22.

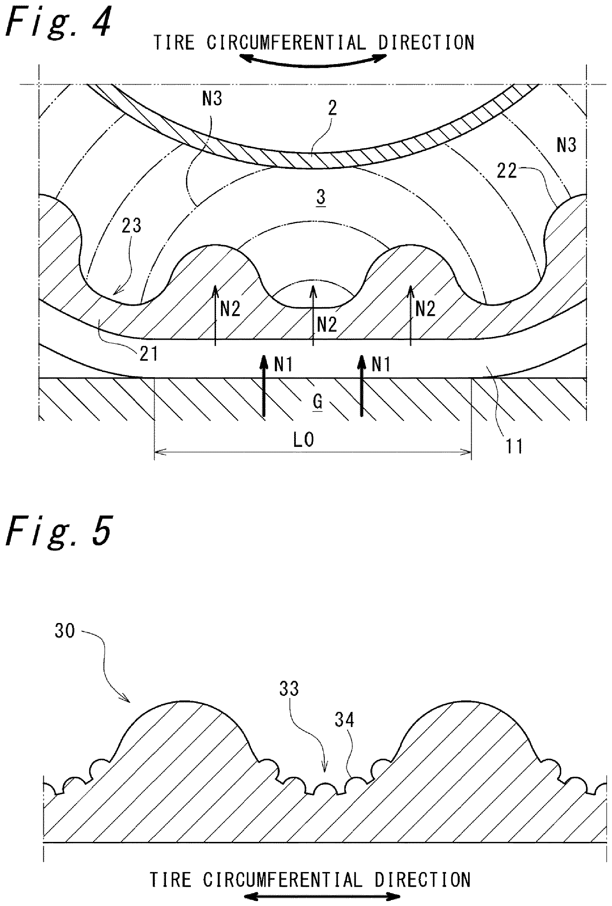

FIG. 4 is a cross-sectional view similar to FIG. 2, showing a periphery of a ground contact portion of the tire rim assembly 1 in an enlarged manner. As shown in FIG. 4, the tire rim assembly 1 is configured to be in contact with a road surface with a ground contact length L0 on the tire equatorial plane when filled with air at a prescribed air pressure. The protrusions 22 adjacent to each other in the tire circumferential direction are formed at a formation pitch P (see FIG. 3) shorter than the ground contact length L0. The formation pitch P of the plurality of protrusions 22 is preferably set at regular intervals in the tire circumferential direction. This makes it easy to inhibit deterioration of uniformity and weight balance of the pneumatic tire 10 due to the provision of the sponge member 20.

As shown in FIG. 3, recesses 23 extending in the tire width direction are formed between the protrusions 22 adjacent to each other in the tire circumferential direction. A length L2 of each recess 23 in the tire circumferential direction is a length obtained by subtracting the length L1 of the protrusion 22 from the formation pitch P, and is preferably set equal to the length L1 of the protrusion 22.

A corner R portion 23a is formed in a bottom corner of the recess 23. Specifically, the corner R portion 23a is formed at a corner between a sidewall 22b of the protrusion 22 and the base portion 21, and extends along the protrusion 22 in the tire width direction. The corner R portion 23a is formed in an arc shape having a center O1 on an opposite side of the base portion 21. The curvature radius R1 is set larger than 25% of the length L2 of the recess 23.

As shown in FIG. 4, when the tire rim assembly 1 is rolling on a road surface, a vibration in the tire radial direction can occur in the tread portion 11 due to unevenness of the road surface G. At this time, the vibration of the tread portion 11 is transmitted to the air in the tire inner cavity 3 and becomes a tire sound N1. Since the sponge member 20 is attached to the inner peripheral surface of the tread portion 11, the tire sound N1 is reduced by sound absorption by the sponge member 20 and becomes a tire sound N2.

Here, since in the sponge member 20 the formation pitch P of the protrusions 22 is set equal to or less than the ground contact length L0, there is at least one protrusion 22 in a ground contact region. Therefore, the tire sound N1 is absorbed not only by the base portion 21 of the sponge member 20 but also by the protrusion 22. As a result, the tire sound N1 is further reduced and transmitted to the tire inner cavity 3.

The tire sound N2 resonates while propagating in the tire inner cavity 3 and becomes a cavity resonance N3. The cavity resonance N3 propagates radially from the ground contact portion in the tire inner cavity 3 as shown by two-dot chain lines in FIG. 4, and part of the cavity resonance N3 is reflected by the rim 2. That is, the cavity resonance N3 includes not only the sound spreading radially from the ground contact portion but also the sound reflected from the rim 2.

Here, since the plurality of protrusions 22 and the recesses 23 are alternately provided in the sponge member 20, the cavity resonance N3 that radially propagates is easily received by the plurality of protrusions 22 and the recesses 23, and is reduced through absorption by the protrusions 22 and the recesses 23. Moreover, the top 22a of the protrusion 22 is formed in an arc shape, and the corner R portion 23a is formed in the recess 23. Therefore, the cavity resonance N3 is easily received normally, and is more efficiently reduced through absorption by the sponge member 20.

According to the tire rim assembly 1 described above, the following effects can be acquired.

(1) The cavity resonance N3 propagating radially in the tire inner cavity 3 from the ground contact portion is easily received by the protrusions 22 and the recesses 23 of the sponge member 20, and is reduced effectively through absorption by the protrusions 22 and the recesses 23.

Furthermore, the recess 23 of the sponge member 20 is formed such that the curvature radius R1 of the corner R portion 23a formed in the bottom corner is larger than 25% of the length L2 of the recess 23. Therefore, the surface area of the bottom is larger than when the recess 23 is formed in a rectangular shape. This enlarges an area in the recess 23 that receives the cavity resonance N3 propagating in the tire radial direction in the tire inner cavity 3, and causes the cavity resonance N3 to be easily received normally in various directions, thereby improving sound absorption in the recess 23.

Moreover, since heat transfer from the tread portion 11 is efficiently dissipated by the recess 23 having an enlarged area, heat dissipation in the recess 23 improves.

Furthermore, since flexibility of the recess 23 is improved by forming the corner R portion 23a in the bottom corner of the recess 23, it is easy to cause the sponge member 20 to follow deformation of the tread portion 11 in the tire circumferential direction when the tread portion 11 is brought into contact with the ground. This improves bending durability of the sponge member 20, and adhesion to the inner liner 16 is less likely to be damaged.

(2) Since the top 22a is formed in an arc shape as viewed from the tire width direction, the protrusion 22 easily receives the cavity resonance normally from various directions over the entire top of the protrusion. This further improves sound absorption at the top.

(3) The formation pitch P between the pair of protrusions 22 adjacent to each other in the tire circumferential direction is shorter than the ground contact length L0 in the tire equatorial plane of the pneumatic tire 10. Therefore, at least one protrusion 22 exists in the ground contact shape of the pneumatic tire 10. Accordingly, the vibration-related noise that is input from the tread portion 11 when brought into contact with the ground is absorbed by the protrusions 22 when being transmitted to the tire inner cavity 3. That is, since the vibration input from the tread portion 11, which may cause the cavity resonance N3, is reduced effectively on the input source side, the cavity resonance N3 is reduced.

(4) The sponge member 20 is set such that the height H1 in the tire radial direction of the protrusion 22 is 20mm or more, and 50% or less of the sectional height H0 of the pneumatic tire 10. Therefore, it is easy to obtain the reduction effect of the cavity resonance N3 while inhibiting deterioration of assembling workability to the rim. That is, when the height H1 of the protrusion 22 is less than 20 mm, it is difficult to effectively obtain the reduction effect of the cavity resonance N3. Meanwhile, when the height H1 of the protrusion 22 is greater than 50% of the tire sectional height H0, the protrusion 22 easily interferes with the rim 2 during assembly of the rim, deteriorating assembling workability to the rim.

(5) The sponge member 20 has the width W1 in the tire width direction between 30% and 70% inclusive of the tire width W0 of the pneumatic tire 10. Therefore, the reduction effect of the cavity resonance N3 by the sponge member 20 can be easily obtained while maintaining attaching property of the sponge member 20 along the inner peripheral surface of the tread portion 11. That is, if the width W1 of the sponge member 20 is less than 30% of the tire width W0, it is difficult to sufficiently obtain the reduction effect of the cavity resonance N3. Meanwhile, if the width W1 of the sponge member 20 is greater than 70% of the tire width W0, the sponge member 20 easily interferes with the sidewall portions 12 and is bent, which deteriorates attaching property of the sponge member, and deteriorates adhesion property to the inner liner 16.

In the above embodiment, the corner R portion 23a formed in the recess 23 of the sponge member 20 is set such that the curvature radius R1 is greater than 25% of the length L2 of the recess 23.

In an embodiment not forming part of the present invention, the recess 23 may be formed as a semicircular arc portion with the length L2 of the recess 23 as a diameter and protruding outward in the tire radial direction such that the entire recess 23 has an arc shape. Accordingly, the recess 23 is formed such that the surface area is greater, thereby further improving heat dissipation of the sponge member 20 and further improving sound absorption and bending durability.

FIG. 5 is a cross-sectional view along a tire circumferential direction showing a sponge member 30 not forming part of the present invention. As shown in FIG. 5, in the sponge member 30, a plurality of small protrusions 34 protruding inward in a tire radial direction and extending in a tire width direction may be formed in a recess 33, the small protrusions 34 being arranged in a tire circumferential direction. This leads to a configuration in which a surface area of the recess 33 further increases. This further improves heat dissipation of the sponge member 30 and further improves sound absorption and bending durability.

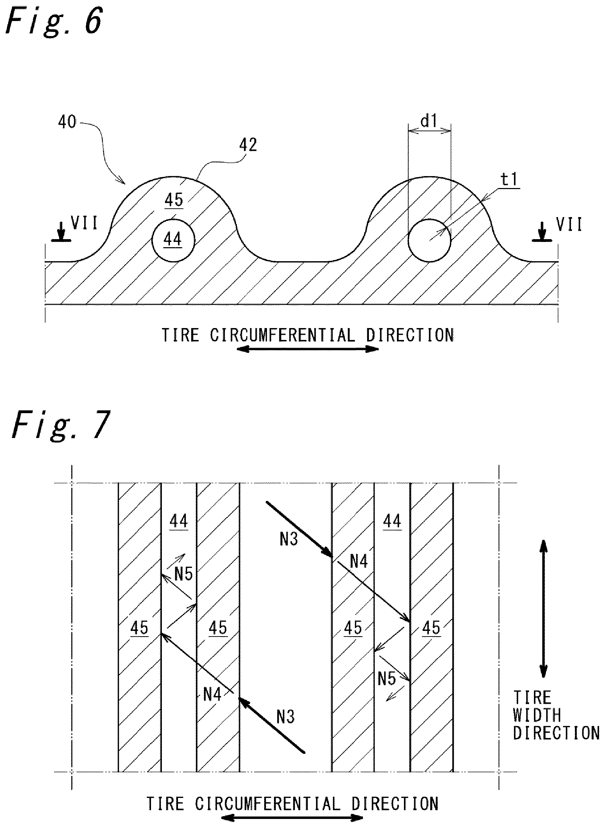

FIG. 6 is a cross-sectional view along a tire circumferential direction showing a sponge member 40 according to a modification. As shown in FIG. 6, cylindrical hollow portions 44 penetrating protrusions 42 of the sponge member 40 in a tire width direction are formed.

FIG. 7 is a cross-sectional view of the protrusions 42 in the hollow portions 44 along the line VII-VII of FIG. 6. As shown in FIG. 7, the cavity resonance N3 is absorbed by a solid portion 45 between the surface of the protrusion 42 and the hollow portion 44 and reduced to a cavity resonance N4. Furthermore, the cavity resonance N4, which is attenuated by diffused reflection on an inner wall surface in the hollow portion 44, is further reduced to a cavity resonance N5. Although illustration is omitted, the tire sound N1 caused by the vibration of the tread portion 11 also becomes the tire sound N2 that is further reduced by attenuation in the hollow portion 44 in addition to sound absorption in the solid portion 45 of the protrusion 42.

Therefore, by combining the sound absorption by the solid portion 45 and the attenuation by the hollow portion 44, the tire sound N1 becomes the more reduced tire sound N2, and the cavity resonance N3 is more effectively reduced.

A diameter d1 of the hollow portion 44 is set equal to a thickness t1 of the sponge member from the surface of the protrusion 42 to the hollow portion 44. This allows the cavity resonance N3 to be further effectively reduced by combining the sound absorption in the solid portion 45 and the attenuation in the hollow portion 44 in well balance.

In the above embodiment, the protrusion 22 is formed such that the top 22a has an arc shape as viewed from the tire width direction. Meanwhile, the protrusion 22 may be formed in a rectangular shape, or an angular R portion may be formed in a rectangularly formed angled part.

## Claims

1. A pneumatic tire (10) comprising: a tread portion (11); and a sponge member (20,30,40) extending in a tire circumferential direction and attached to a tire inner peripheral surface of the tread portion (11) over an entire circumference thereof,
wherein the sponge member (20,30,40) includes:
a base portion (21) attached to the tire inner peripheral surface of the tread portion (11);
a plurality of protrusions (22,42) protruding inward in a tire radial direction from the base portion (11) and extending in a tire width direction, the protrusions (22,42) being formed at intervals in the tire circumferential direction; and
a plurality of recesses (23,33) formed between the plurality of protrusions (22,42), and
rounded portions (23a) are formed in bottom corners of the recesses (23,33),
**characterized in that**
a curvature radius (R1) of the rounded portions (23a) is larger than 25% of a width (L2) of the recesses (23,33) in the tire circumferential direction,
the recess (23,33) has a bottom portion provided with a pair of rounded portions (23a) adjacent to each other in the tire circumferential direction and a base inner peripheral surface positioned on an inner side of the base (21) in the tire radial direction, the base inner peripheral surface extending parallel to the tire inner peripheral surface and connecting the pair of rounded portions (23a) to each other in the tire circumferential direction, and
the sponge member (20,30,40) has a thickness (T1) in the tire radial direction at the base inner peripheral surface.

2. The pneumatic tire (10) according to claim 1, wherein
an angled part of a top (22a) of each of the protrusions (22,42) is rounded.

3. The pneumatic tire (10) according to claim 1, wherein
each of the protrusions (22,42) is formed as a semicircular arc portion protruding inward in the tire radial direction with a width (L1) in the tire circumferential direction as a diameter.

4. The pneumatic tire (10) according to any one of claims 1 to 3, wherein
each of the protrusions (42) is provided with a hollow portion (44) penetrating the protrusion (42) in the tire width direction.

5. The pneumatic tire (10) according to claim 4, wherein
the hollow portion (44) is cylindrical, and a diameter (d1) of the hollow portion (44) is equal to a thickness (t1) of the sponge member (40) from a surface of each of the protrusions (42) to the hollow portion (44).

6. The pneumatic tire (10) according to any one of claims 1 to 5, wherein
a formation pitch (P) of a pair of the protrusions (22,42) adjacent to each other in the tire circumferential direction is shorter than a ground contact length (L0) in the tire circumferential direction of the pneumatic tire (10).

7. The pneumatic tire (10) according to any one of claims 1 to 6, wherein
a height (H1) of the sponge member (20,30,40) in the tire radial direction of a portion where the protrusions (22,42) are formed is 20 mm or more, and 50% or less of a sectional height (H0) of the pneumatic tire (10).

8. The pneumatic tire (10) according to any one of claims 1 to 7, wherein
a length(W1) of the sponge member (20,30,40) in the tire width direction is between 30% and 70% inclusive of the tire width (W0) of the pneumatic tire (10).

## Patentansprüche

1. Luftreifen (10) mit: einem Laufflächenbereich (11) und einem Schwammelement (20, 30, 40), das sich in einer Reifenumfangsrichtung erstreckt und an einer inneren peripheren Reifenoberfläche des Laufflächenbereichs (11) über deren gesamten Umfang angebracht ist,
wobei das Schwammelement (20, 30, 40) umfasst:
einen Basisbereich (21), der an der inneren peripheren Reifenfläche des Laufflächenbereichs (11) angebracht ist;
mehrere vorstehende Teilen (22, 42), die nach innen in einer Reifenradialrichtung von dem Basisbereich (11) hervorstehen und sich in einer Reifenbreitenrichtung erstrecken, wobei die vorstehenden Teile (22, 42) in der Reifenumfangsrichtung in Intervallen gebildet sind; und
mehrere Vertiefungen (23, 33), die zwischen den mehreren vorstehenden Teilen (22, 42) gebildet sind; und
wobei abgerundete Bereiche (23a) in unteren Ecken der Vertiefungen (23, 33) gebildet sind,
**dadurch gekennzeichnet, dass**
ein Krümmungsradius (R1) der abgerundeten Bereiche (23a) größer als 25% einer Breite (L2) der Vertiefungen (23, 33) in der Reifenumfangsrichtung ist,
die Vertiefung (23, 33) einen unteren Bereich hat, der mit einem Paar von abgerundeten Bereichen (23a), die zueinander in der Reifenumfangsrichtung benachbart sind, und einer inneren peripheren Basisfläche versehen ist, die an einer inneren Seite der Basis (21) in der Reifenradialrichtung positioniert ist, wobei sich die innere periphere Basisfläche parallel zu der inneren peripheren Reifenoberfläche erstreckt und das Paar von abgerundeten Bereichen (23a) miteinander in der Reifenumfangsrichtung verbindet, und
das Schwammelement (20, 30, 40) eine Dicke (T1) in der Reifenradialrichtung an der inneren peripheren Basisfläche hat.

2. Luftreifen (10) nach Anspruch 1, wobei
ein abgewinkelter Teil eines Oberteils (22a) jedes der vorstehenden Teile (22, 42) abgerundet ist.

3. Luftreifen (10) nach Anspruch 1, wobei
jedes der vorstehenden Teile (22, 42) als ein halbkreisförmiger Bogenbereich gebildet ist, der nach innen in der Reifenradialrichtung mit einer Breite (L1) in der Reifenumfangsrichtung als einem Durchmesser hervorsteht.

4. Luftreifen (10) nach einem der Ansprüche 1 bis 3, wobei
jedes der vorstehenden Teile (42) mit einem hohlen Bereich (44) versehen ist, der den vorstehenden Teil (42) in der Reifenbreitenrichtung durchdringt.

5. Luftreifen (10) nach Anspruch 4, wobei
der hohle Bereich (44) zylindrisch ist und ein Durchmesser (D1) des hohlen Bereichs (44) gleich einer Dicke (t1) des Schwammelements (40) von einer Oberfläche jedes der vorstehenden Teile (42) zu dem hohlen Bereich (44) ist.

6. Luftreifen (10) nach einem der Ansprüche 1 bis 5, wobei
ein Formationsabstand (P) eines Paares der vorstehenden Teile (22, 42), die zueinander in der Reifenumfangsrichtung benachbart sind, kürzer ist als eine Grundkontaktlänge (L0) in der Reifenumfangsrichtung des Luftreifens (10).

7. Luftreifen (10) nach einem der Ansprüche 1 bis 6, wobei
eine Höhe (H1) des Schwammelements (20, 30, 40) in der Reifenradialrichtung eines Bereichs, in dem die vorstehenden Teile (22, 42) gebildet sind, 20 mm oder mehr und 50% oder weniger einer sektionalen Höhe (H0) des Luftreifens (10) ist.

8. Luftreifen (10) nach einem der Ansprüche 1 bis 7, wobei
eine Länge (W1) des Schwammelements (20, 30, 40) in der Reifenbreitenrichtung zwischen 30% und 70% inklusive der Reifenbreite (W0) des Luftreifens (10) ist.

## Revendications

1. Pneumatique (10) comprenant : une portion bande de roulement (11) ; et un élément spongieux (20, 30, 40) s'étendant dans une direction circonférentielle de pneu et fixé à une surface périphérique intérieure de pneu de la portion bande de roulement (11) sur une circonférence entière de celle-ci ;
dans lequel l'élément spongieux (20, 30, 40) comporte :
une portion base (21) fixée à la surface périphérique intérieure de pneu de la portion bande de roulement (11) ;
une pluralité de saillies (22, 42) faisant saillie vers le haut dans une direction radiale de pneu à partir de la portion base (11) et s'étendant dans une direction de largeur de pneu, les saillies (22, 42) étant formées à des intervalles dans la direction circonférentielle de pneu ; et
une pluralité de creux (23, 33) formés entre la pluralité de saillies (22, 42), et
des portions arrondies (23a) sont formées dans des coins inférieurs des creux (23, 33),
**caractérisé en ce que**
un rayon de courbure (R1) des portions arrondies (23a) est plus grand que 25 % d'une largeur (L2) des creux (23, 33) dans la direction circonférentielle de pneu,
le creux (23, 33) a une portion inférieure dotée d'une paire de portions arrondies (23a) adjacentes l'une à l'autre dans la direction circonférentielle de pneu et une surface périphérique intérieure de base positionnée sur un côté intérieur de la base (21) dans la direction radiale de pneu, la surface périphérique intérieure de base s'étendant parallèle à la surface périphérique intérieure de pneu et reliant la paire de portions arrondies (23a) l'une à l'autre dans la direction circonférentielle de pneu, et
l'élément spongieux (20, 30, 40) a une épaisseur (T1) dans la direction radiale de pneu au niveau de la surface périphérique intérieure de base.

2. Pneumatique (10) selon la revendication 1, dans lequel
une partie inclinée d'un dessus (22a) de chacune des saillies (22, 42) est arrondie.

3. Pneumatique (10) selon la revendication 1, dans lequel
chacune des saillies (22, 42) est formée comme une portion arquée semi-circulaire faisant saillie vers l'intérieur dans la direction radiale de pneu avec une largeur (L1) dans la direction circonférentielle de pneu en tant que diamètre.

4. Pneumatique (10) selon l'une quelconque des revendications 1 à 3, dans lequel
chacune des saillies (42) est dotée d'une portion creuse (44) pénétrant dans la saillie (42) dans la direction de largeur de pneu.

5. Pneumatique (10) selon la revendication 4, dans lequel
la portion creuse (44) est cylindrique, et un diamètre (d1) de la portion creuse (44) est égal à une épaisseur (t1) de l'élément spongieux (40) depuis une surface de chacune des saillies (42) jusqu'à la portion creuse (44).

6. Pneumatique (10) selon l'une quelconque des revendications 1 à 5, dans lequel
un pas de formation (P) d'une paire des saillies (22, 42) adjacentes l'une à l'autre dans la direction circonférentielle de pneu est plus court qu'une longueur de contact avec le sol (L0) dans la direction circonférentielle de pneu du pneumatique (10).

7. Pneumatique (10) selon l'une quelconque des revendications 1 à 6, dans lequel
une hauteur (H1) de l'élément spongieux (20, 30, 40) dans la direction radiale de pneu d'une portion où les saillies (22, 42) sont formées est de 20 mm ou plus, et 50 % ou moins d'une hauteur en coupe (H0) du pneumatique (10) .

8. Pneumatique (10) selon l'une quelconque des revendications 1 à 7, dans lequel
une longueur (W1) de l'élément spongieux (20, 30, 40) dans la direction de largeur de pneu est entre 30 % et 70 % inclus de la largeur de pneu (W0) du pneumatique (10) .
